# EUROPÄISCHE PATENTSCHRIFT

(11) **EP 3 767 503 B1**
(45) Veröffentlichungstag und Bekanntmachung des Hinweises auf die Patenterteilung: **19.02.2025**
(21) Anmeldenummer: 19187039.3
(22) Anmeldetag: 18.07.2019
(51) Int. Cl.: G06F 11/07, G06F 21/53, G06F 21/55

(54) **VERFAHREN UND TESTUMGEBUNG ZUR BEREITSTELLUNG EINER ANWENDUNG FÜR EINE COMPUTERGESTEUERTE KOMPONENTE**
METHOD AND TEST ENVIRONMENT FOR PROVIDING AN APPLICATION FOR A COMPUTER-CONTROLLED COMPONENT
PROCÉDÉ ET ENVIRONNEMENT D'ESSAI PERMETTANT DE FOURNIR UNE APPLICATION POUR UN COMPOSANT COMMANDÉ PAR ORDINATEUR

(43) Veröffentlichungstag der Anmeldung: 20.01.2021
(73) Patentinhaber: Siemens Aktiengesellschaft, 80333 München (DE)
(72) Erfinder: Höfele, Markus, 68259 Mannheim (DE); Kob, Peter, 90562 Heroldsberg (DE); Schrey, Rolf, 41189 Mönchengladbach (DE); Zeltner, Armin, 91085 Weisendorf (DE)
(74) Vertreter: Siemens Patent Attorneys

(56) Entgegenhaltungen:
- CN-A- 109 656 829
- US-A1- 2019 156 023

## Beschreibung

Die Erfindung betrifft ein Verfahren zur Bereitstellung einer Anwendung für eine computergesteuerte Komponente gemäß dem Oberbegriff des Patentanspruchs 1, und eine Anordnung zur Bereitstellung einer Anwendung für eine computergesteuerte Komponente gemäß dem Oberbegriff des Patentanspruchs 9.

Anwendungsprogramme, also von Computern ausführbare Software, insbesondere solche für industrielle Anwendungen und dergleichen, kurz: Anwendungen, werden vermehrt über sogenannte App-Stores angeboten, das sind Programm-Server ("Repositories"), die in der Regel von einer Vielzahl von Anbietern die Anwendungen speichern und zum "Download" bereithalten. Ein häufiges Anwendungsszenario für solche Anwendungsspeicher ist die Bereitstellung von Anwendungen für sogenannte Edge-Geräte oder Industrial-Edge-Devices, die an der Schnittstelle zwischen einem Automatisierungsnetzwerk und einem öffentlichen Datennetzwerk (meist: Internet) angesiedelt sind, und die zum einen Rechenleistung für die Datenverarbeitung im Automatisierungsnetzwerk bereitstellen, und zum anderen den Austausch von meist vorverarbeiteten Daten zwischen dem Automatisierungsnetzwerk und dem öffentlichen Netzwerk, insbesondere einer sogenannten "Cloud", bewerkstelligen.

Oft sind die Edge-Geräte, also die Komponenten zur Ausführung der Anwendungen, zur gleichzeitigen Ausführung von mehreren Anwendungen eingerichtet, was gemeinhin mittels einer Container-Virtualisierung, insbesondere durch die Verarbeitung sogenannter Docker-Container, bewerkstelligt wird.

Im Gegensatz zu klassischen, in sich geschlossenen und gekapselten Automatisierungsumgebungen, die oft von einem einzigen Betreiber "aus einer Hand" projektiert und programmiert werden, werden über die Anwendungsspeicher (App-Stores) in den heutigen Systemen die Anwendungen zahlreicher Anbieter zur Verfügung gestellt, was die Kontrolle der Anwendungen hinsichtlich der Datensicherheit und dergleichen erschwert. Weiter kommt erschwerend hinzu, dass durch die Anbindung der Komponenten, also insbesondere der Edge-Devices, an das öffentliche Netzwerk (Internet, Cloud) die Gefahr von unautorisierten Zugriffen und Datenübertragungen zunimmt.

Die Anwendungen sollen daher definierten Sicherheitsanforderungen und Datenverarbeitungs-Richtlinien (sogenannten "policies") unterliegen, d.h., dass bei einer über den Anwendungsspeicher zur Verfügung gestellte Anwendung ("App") sichergestellt sein soll, dass diese vor der Auslieferung (Zur-Verfügung-Stellung über den Anwendungsspeicher) geprüft wird, ob alle Bestandteile der Anwendung bezüglich bekannter Sicherheitslecks unbedenklich sind und ob sie vor allen Dingen vorgegebenen policies, also Zugriffsregeln auf Daten, Kommunikationsschnittstellen, angeschlossene Peripherie und dergleichen, eingehalten werden.

Dazu ist es bekannt, dass die Anwendung, insbesondere sogenannte "Docker Image Files", also gekapselte Programmpakete oder "Container", bezüglich der verwendeten Bibliotheken auf Sicherheitslücken geprüft und qualifiziert werden. Dies bedeutet, dass in einer groben Näherung davon ausgegangen wird, dass bei der Verwendung von geprüften Laufzeitbibliotheken und dergleichen die damit erzeugte Anwendung unbedenklich ist. Selbstverständlich stellt die Verwendung von zertifizierten Bibliotheken und dergleichen tatsächlich aber nicht unbedingt sicher, dass die Anwendung keine unerlaubten Zugriffe durchführt.

Die Druckschrift US 20190156023 A1 - Gerebe et al. "SYSTEM FOR SECURING SOFTWARE CONTAINERS WITH EMBEDDED AGENT" schlägt vor, die Integrität von Containern mit Anwendungen durch einen inhaltsbasierten kryptographischen Fingerabdruck zu schützen.

Es ist also eine Aufgabe der vorliegenden Erfindung, das regelkonforme Verhalten von Anwendungen für industrielle Komponenten zu überprüfen und vor allen Dingen auch zur Laufzeit sicherzustellen.

Es ist eine Kernidee der erfindungsgemäßen Lösung dieser Aufgabe, dass eine Anwendung vor der Publikation (Bereitstellung für den Produktivbetrieb) in einer speziellen Testumgebung betrieben wird bzw. ausgeführt wird, und dass dabei ein Fingerprint oder dergleichen des Verhaltensmusters und der Datenzugriffe erzeugt wird, und dieser Fingerprint oder dergleichen mit der Anwendung in dem Anwendungsspeicher gespeichert wird. Damit sind die Datenzugriffsmuster der neuen Anwendung bekannt, wobei diese auch während dieses Testzyklus genauer hinsichtlich ihrer Konformität zu vorgegebenen Regeln / policies überprüft werden können. Die Kernidee der Lösung sieht weiter vor, dass zur Laufzeit, also im Produktivbetrieb der Anwendung, ein neuer Fingerprint oder dergleichen in einer entsprechenden Weise gebildet wird, und dass der im Testbetrieb und der im Produktivbetrieb jeweils erzeugte Fingerprint oder dergleichen miteinander verglichen werden, so dass potentielle Angriffe (von außen) bzw. Fehlverhalten (der App selber) erkannt und gemeldet werden können. Anstelle einer Meldung kann selbstverständlich auch eine automatische Außerbetriebsetzung oder eine andere vorprogrammierte Reaktion erfolgen. Durch Festlegung eines Grades einer erlaubten Abweichung zwischen den Fingerprints oder dergleichen kann je nach Einsatzzweck der Anwendung eine unterschiedliche Sensitivität der Erkennung festgelegt werden. Dabei kann auch für verschiedene Facetten der Prüfung, beispielsweise für Zugriffe auf den Arbeitsspeicher, Zugriffe auf Netzwerkschnittstellen oder andere Kommunikationsmittel, Zugriffe auf Datenpunkte angeschlossener Steuerungen etc. jeweils auch andere erlaubte Abweichungen zwischen den Fingerprints definiert werden.

Die Lösung der Aufgabe sieht insbesondere ein Verfahren gemäß dem Patentanspruch 1 und eine Testumgebung gemäß dem Patentanspruch 9 vor.

Dabei wird ein Verfahren zur Bereitstellung einer Anwendung für eine computergesteuerte Komponente, insbesondere für ein industrielles Edge-Gerät, vorgeschlagen, wobei die Anwendung nach ihrer Erstellung mittels eines Anwendungsspeichers, insbesondere mittels eines APP-Stores, für die Komponente bereitgestellt wird. Dabei wird die Anwendung vor ihrer Bereitstellung in einer Testumgebung ausgeführt, wobei bei der Ausführung der Anwendung in der Testumgebung ein erster charakteristischer Datensatz, insbesondere ein Fingerprint, ein Hash-Wert, eine Profildatei oder eine Merkmalsmalstabelle, über bei der Ausführung der Anwendung registrierte Interaktionen mit oder über die Testumgebung gebildet wird, wobei die Interaktionen jeweils Zugriffe auf Speicherzellen, Register oder Dienste sind, wobei der erste Datensatz zu der Anwendung zugeordnet mittels des Anwendungsspeichers bereitgestellt wird, wobei zur Ausführung der Anwendung diese und der erste Datensatz zu der Komponente übertragen wird, wobei während der Ausführung der Anwendung auf der Komponente zumindest zeitweise ein zweiter charakteristischer Datensatz über die dort registrierten Interaktionen der Anwendung mit oder über die Ausführungsumgebung gebildet wird, wobei der erste und der zweite charakteristische Datensatz miteinander verglichen werden, wobei bei einer Abweichung der Datensätze voneinander, die ein vorgegebenes Maß überschreitet, eine Fehlfunktion gemeldet wird und / oder die Ausführung der Anwendung gestoppt wird. Durch dieses Verfahren kann zum einen sichergestellt werden, dass eine Anwendung vorgegebenen Kriterien hinsichtlich ihres Laufzeitverhaltens entspricht, und zum anderen kann sichergestellt werden, dass die in einem Testbetrieb während der Zertifizierung der Anwendung festgestellten, erlaubten Verhaltensmuster der Anwendung auch im laufenden Betrieb (Positivbetrieb) nicht wesentlich abweichen.

Die Lösung der Aufgabe sieht außerdem eine Anordnung mit einer Testumgebung zur Bereitstellung einer Anwendung für eine computergesteuerte Komponente, insbesondere für ein industrielles Edge-Gerät, und mit einer Komponente mit einer in einer Ausführungsumgebung zur Ausführung der Anwendung, vor, wobei die Testumgebung eine gekapselte Ausführungsumgebung, insbesondere eine sogenannte Sandbox, zur testweisen Ausführung der Anwendung umfasst. Dabei ist die Testumgebung mit einer Überwachungseinrichtung zur Registrierung von Interaktionen der Anwendung mit der oder über die Testumgebung ausgestattet, wobei die Interaktionen jeweils Zugriffe auf Speicherzellen, Register oder Dienste sind, wobei die Überwachungseinrichtung dazu eingerichtet ist, aus den registrierten Interaktionen einen ersten charakteristischen Datensatz, insbesondere einen (digitalen) Fingerprint, einen Hash-Wert, eine Profildatei oder eine Merkmalstabelle, zu bilden, und wobei die Testumgebung dazu eingerichtet ist, nach der testweisen Ausführung der Anwendung und nach der Erstellung des ersten charakteristischen Datensatzes die Anwendung und den ersten charakteristischen Datensatz zu einem Anwendungsspeicher zu übertragen. Dazu ist die Komponente zur Bildung eines zweiten charakteristischen Datensatzes über die dort registrierten Interaktionen der Anwendung mit oder über die Ausführungsumgebung (RT) eingerichtet ist, und wobei vorgesehen ist, dass der erste und der zweite charakteristische Datensatz miteinander verglichen werden, wobei bei einer Abweichung der Datensätze voneinander, die ein vorgegebenes Maß überschreitet, eine Fehlfunktion gemeldet wird und /oder die Ausführung der Anwendung gestoppt wird. Mit dieser Testumgebung können diejenigen Vorteile erzielt werden, die bereits anhand des Verfahrens diskutiert wurden.

Vorteilhafte Ausgestaltungen des erfindungsgemäßen Verfahrens sind in den abhängigen Patentansprüchen angegeben. Die dabei beschriebenen Merkmale und deren Vorteile gelten sinngemäß auch für die erfindungsgemäße Testumgebung. Die vorteilhaften Varianten können sowohl einzeln als auch in sinnfälliger Kombination miteinander realisiert werden.

In einer vorteilhaften Ausgestaltung ist die Testumgebung eine gekapselte Laufzeitumgebung, insbesondere eine sogenannte Sandbox, weil in solchen Ausführungsumgebungen Zugriffe auf Speicherzellen, Register, Dienste etc. besonders gut kontrolliert, registriert und nachvollzogen werden können. Dabei kann insbesondere leicht festgestellt werden, ob unerlaubte Interaktionen, also beispielsweise Zugriffe auf externe Daten oder dergleichen, erfolgen oder nicht. Die Testumgebung kann insbesondere auch eine virtuelle Maschine sein, die die Komponente (Ausführungsumgebung) und deren durch die Anwendung zugreifbare Peripherie nachbildet. So ist es möglich, mit ein- und derselben Testumgebung, also einer "generischen" Hardware-Plattform, Anwendungen für unterschiedliche Zielsysteme (Personal-Computer, Edge-Devices, industrielle Steuerungen, HMI-Geräte, Embedded-Systeme und dergleichen) zu testen und ggf. zu zertifizieren, indem einfach eine passende virtuelle Maschine instanziiert wird.

In einer vorteilhaften Ausgestaltung soll der charakteristische Datensatz zwar so klein wie möglich sein, um die Handhabung zu vereinfachen, andererseits jedoch Art und/oder Häufigkeit von Zugriffen auf Daten einer an die Komponente angeschlossenen industriellen Automatisierungskomponente oder einer anderen Peripherie derart reflektieren, dass unerwünschte Interaktionen von erlaubten Interaktionen sicher unterscheidbar sind. Dazu bietet es sich vorteilhaft an, Interaktionen und andere Zugriffe in Zugriffsklassen zu unterteilen, und je nach Wichtigkeit oder Vulnerabilität einer einzelnen Zugriffsklasse jeweils die Bildung des Fingerprints bzw. des charakteristischen Datensatzes separat einzustellen, als auch jeweils eine erlaubte Abweichung zu definieren. Aus den Teil-Datensätzen der einzelnen Zugriffsklassen wird dann der gesamte charakteristische Datensatz vorteilhaft gebildet.

Vorteilhaft wird der erste charakteristische Datensatz zusammen mit der Anwendung in dem Anwendungsspeicher gespeichert, oder aber zumindest so mit der Anwendung verknüpft bzw. verlinkt, dass ein gemeinsamer Zugriff möglich ist. Vorteilhaft ist dabei der erste charakteristische Datensatz mittels eines digitalen Zertifikats gegen Manipulation und dergleichen geschützt. In einer vorteilhaften Variante erstreckt sich das digitale Zertifikat auch über die Anwendung, so dass die Anwendung und der erste charakteristische Datensatz gemeinsam eine untrennbare, manipulationsgesicherte Einheit bilden. Vorteilhaft ist die Integrität der Anwendung und des charakteristischen Datensatzes mittels einer Public-Key-Infrastruktur überprüfbar.

Vorteilhaft ist der erste charakteristische Datensatz mit Informationen über Art und Umfang der zu registrierenden Interaktionen und über die spezifische Berücksichtigung dieser Interaktionen für den ersten und für den zweiten Datensatz verknüpft. Dies kann beispielsweise anhand von expliziten Regeln (beispielsweise als XML-Datei), oder aber durch die Angabe einer Versionsvorschrift für die Bildung des Datensatzes bzw. Fingerprints oder Hash-Wertes geschehen. Das hat den Vorteil, dass sichergestellt ist, dass der erste Datensatz und der zweite Datensatz jeweils nach denselben Regeln und Vorschriften erstellt werden, was Grundvoraussetzung für den späteren Vergleich der Resultate ist. Weiter kann der erste Datensatz auch Informationen ("Blacklist", "Whitelist") über erlaubte oder nichterlaubte oder ggf. sogar vorgeschriebene Interaktionen, Datenzugriffe und dergleichen enthalten, so dass ein Fehlverhalten sicherer und schneller erkannt werden kann. Dies macht es auch möglich, entsprechende Ports, Schnittstellen und dergleichen seitens der Komponente, also der Testumgebung im Produktivbetrieb, von vorne herein automatisch zu sperren nach Art einer Firewall, was zusätzliche Datensicherheit bietet.

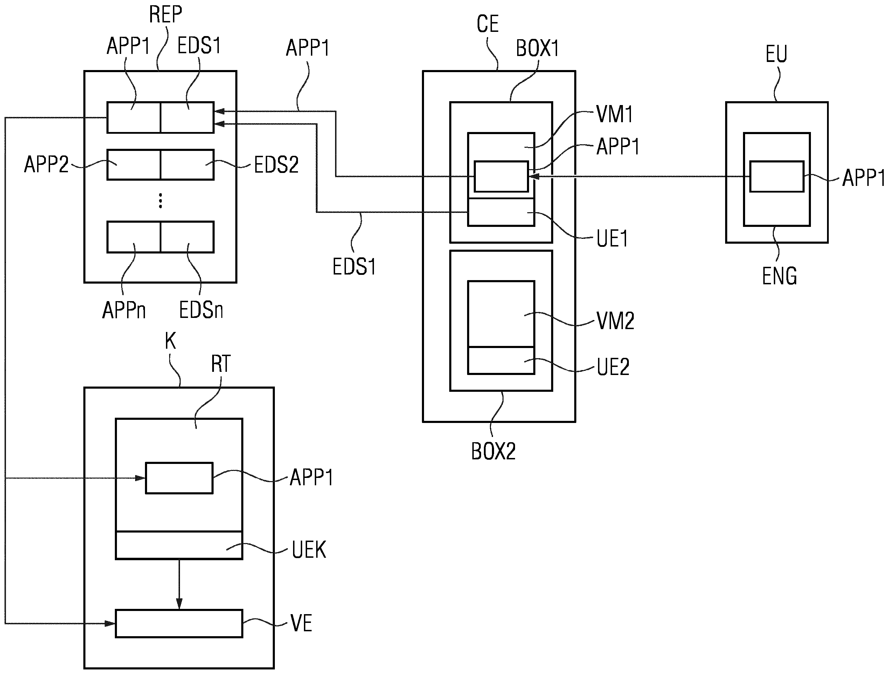

Ein Ausführungsbeispiel des erfindungsgemäßen Verfahrens wird nachfolgend anhand der Zeichnung erläutert. Es dient gleichzeitig der Erläuterung einer erfindungsgemäßen Testumgebung.

Dabei zeigt die einzige Figur in schematischer Darstellung ein Netzwerk mit einem Anwendungsspeicher, einer Zertifizierungseinrichtung, einem Entwicklungssystem für Anwendungen und einer Komponente als Ausführungsumgebung für die Ausführung der Anwendung im produktiven Betrieb.

In der Figur ist eine Entwicklungsumgebung EU gezeigt, also ein Arbeitsplatz für die Entwicklung von Software. In der Entwicklungsumgebung EU läuft ein Engineeringsystem ENG ab, mit dem eine Anwendung APP1 erstellt wird. Im vorliegenden Fall ist die Anwendung APP1 eine Software für ein industrielles Edge-Device, welches in der Figur als Komponente K das Zielsystem für die Anwendung APP1 bildet. Im vorliegenden Ausführungsbeispiel ist die Anwendung APP1 dazu eingerichtet, Produktionsdaten von speicherprogrammierbaren Steuerungen, die mit der Komponente K Daten austauschen können, zu sammeln, statistisch auszuwerten und an ein externes SCADA-System (Supervisory Control and Data Acquisition) zu übertragen; die industrielle Steuerung und das SCADA-System sind zur Vereinfachung in der Figur jedoch nicht dargestellt.

Die Figur zeigt weiterhin eine Testumgebung CE ("certification environment"), die im Prinzip aus einem Server besteht, auf dem verschiedene Testumgebungen BOX1, BOX2 instanziiert sind, wobei die Testumgebungen BOX1, BOX2 im vorliegenden Beispiel virtuelle Maschinen sind, von denen die Testumgebung BOX1 eine sogenannte Docker-Engine nachbildet, wobei die Docker-Engine einer Laufzeitumgebung RT der Komponente K entspricht. Zusätzlich wird auch eine industrielle Steuerung als Datenquelle in der gleichen Weise simuliert, wie auch die reale industrielle Steuerung eine Datenquelle für die Komponente K darstellt. Außerdem ist die Testumgebung BOX1 auch zur Simulation einer Datensenke nach Art des beschriebenen SCADA-Systems ausgebildet. In einer alternativen Ausführungsform kann die Testumgebung BOX1, BOX2 auch in eine reale Umgebung eingebettet sein, also mit einer realen Steuerung etc. verknüpft sein; ein solches Szenario wird auch als "HIL" (Hardware-in-the-loop) bezeichnet.

Entsprechend ist die Anwendung APP1 ein sogenannter Docker-Container, der im Produktionsbetrieb in der Laufzeitumgebung RT abläuft, für einen Test und eine Zertifizierung jedoch in der Testumgebung BOX1 ausgeführt wird. Die Testumgebung BOX1 umfasst weiter eine Protokollierungsfunktion UE1 (Überwachungs-Engine), mit der untere anderem der Datenaustausch der Anwendung APP1 während ihres Betriebs in der Testumgebung BOX1 mit den simulierten Datenquellen und Datensenken protokolliert und ausgewertet werden kann. Weiterhin ist die Protokollierungsfunktion UE1 dazu eingerichtet, über die registrierten Interaktionen der Anwendung APP1, also Zugriff auf die Datenquellen, Übertragungen an die Datensenken, interne Speicherzugriffe, Bibliotheksaufrufe, Zugriffe auf (simulierte) Hardware-Ressourcen etc. einen ersten charakteristischen Datensatz EDS1 zu bilden und mit der Anwendung APP1 zu verknüpfen und nach dem erfolgten Test und Zertifizierung an den Anwendungsspeicher REP (Repository) übermitteln.

Der Anwendungsspeicher REP stellt in dem dargestellten Gesamtsystem einen sogenannten APP-Store dar, mit dem die Anwendungen APP1, ..., APPn für die Komponente K und andere Komponenten zur Verfügung gestellt werden können. Es wird darauf hingewiesen, dass andere Komponenten auch eines anderen Typs sein können, und dass verschiedene "Lieferanten" die verschiedenen Anwendungen APP1, ..., APPn bereitstellen können, ggf. auch gegen Bezahlung.

Wie bereits erwähnt, zeigt die Komponente K eine Anzahl von Laufzeitumgebungen RT ("runtime environment") zum Ablauf von sogenannten Docker-Containern, wobei nur eine Laufzeitumgebung RT dargestellt ist. Die Laufzeitumgebung RT umfasst oder hat Zugriff auf eine zweite Überwachungseinrichtung UEK, die in ähnlicher Weise oder identisch zu der Überwachungseinrichtung UE1 der Testumgebung BOX1 aufgebaut ist. Dabei ist die Überwachungseinrichtung UEK mit einer Vergleichseinrichtung VE verbunden, die zum Vergleich von dem ersten charakteristischen Datensatz EDS1 mit einem von der Überwachungseinrichtung UEK beim produktiven Ablauf der Anwendung APP1 gebildeten zweiten charakteristischen Datensatz (nicht dargestellt) eingerichtet ist. Die Vergleichseinrichtung VE ist dabei so programmiert, dass bei einer administrierbaren, signifikanten Abweichung der charakteristischen Datensätze voneinander eine Warnung ausgegeben wird, ein Stopp des Ablaufs der Abwendung APP1 erfolgt oder eine andere vorprogrammierte Reaktion erfolgt.

Die Vergleichseinrichtung VE kann auch weitere Kontrollfunktionen ausüben, insbesondere kann mit dem ersten charakteristischen Datensatz EDS1 oder auf eine andere Art und Weise eine vorgegebene Blacklist oder eine vorgegebene Whitelist (oder beides) empfangen und berücksichtigt werden, wobei die Blacklist Interaktionen der Anwendung APP1 beschreibt, die keinesfalls durchgeführt werden dürfen, und die Whitelist Interaktionen vorschreibt, die zumindest einmal oder in regelmäßigen Zeitabständen oder unter bestimmten Bedingungen ausgeführt werden dürfen oder gar unbedingt ausgeführt werden müssen, beispielsweise Aufruf einer sogenannten Watchdog-Funktion oder dergleichen.

Der übliche Workflow im dargestellten System geht also davon aus, dass zuerst mit dem Entwicklungssystem ENG die Anwendung APP1 programmiert wird. Optional können dabei auch eine Blacklist oder eine Whitelist definiert werden. Weiter kann bei der Entwicklung oder zu einem anderen Zeitpunkt und durch ein anderes System bzw. einen anderen Arbeitsplatz ein erlaubtes Interaktionsmuster definiert werden, also definiert werden, auf welche Datenpunkte einer unterlagerten speicherprogrammierbaren Steuerung die Anwendung wie oft und in welcher Weise zugreifen darf, welche Parameter an eine Datensenke übertragen werden dürfen, auf welche Speicherbereiche oder Informationen zugegriffen werden darf (und auch in welcher Art und mit welcher Frequenz) etc. Alle letztgenannten Informationen werden der Überwachungseinrichtung UE der Testumgebung BOX1 zur Verfügung gestellt, wonach die Anwendung APP1 in der Testumgebung BOX1, konkret in der dort gebildeten virtuellen Maschine VM1, zum Ablauf gebracht wird. Die Überwachungseinrichtung UE1 umfasst einen Algorithmus, der aus den registrierten Interaktionen der Anwendung APP1 während des Testbetriebs bzw. des Zertifizierungsbetriebs einen charakteristischen Datensatz EDS1 bildet. Dabei wird aus jeder registrierten und überwachten Interaktion zumindest beim erstmaligen Aufruf ein Prüfwert generiert, der mit anderen Prüfwerten zu einem Hash-Wert oder Schlüssel hinzugefügt wird. Natürlich können auch Häufigkeiten eines Aufrufs, Ziel eines Aufrufes oder einer Interaktion und dergleichen eine Auswirkung auf den gebildeten ersten Datensatz EDS1 haben. Die registrierten Interaktionen werden dabei auf einem separaten Arbeitsplatz dargestellt, so dass ein Prüfingenieur feststellen kann, ob lediglich erlaubte Interaktionen abgelaufen sind, oder auch unerlaubte Interaktionen, wonach im letzteren Fall die Anwendung APP1 zur Überarbeitung zurückgewiesen wird.

Nach erfolgreichem Test werden die Anwendungen APP1 und der erzeugte erste Datensatz EDS1 zu einer Archivdatei miteinander verknüpft, diese Archivdatei wird mit einem digitalen Schlüssel zertifiziert, so dass später die Integrität dieses Datenpaketes nachvollzogen werden kann, und in den Anwendungsspeicher REP übertragen und damit zur Verwendung zur Verfügung gestellt. Diese Archivdatei oder Container wird zu seiner Verwendung an die Komponente K übertragen, wobei der Teil mit der Anwendung APP1 produktiv in die Laufzeitumgebung RT übernommen wird und der erste charakteristische Datensatz EDS1 der Vergleichseinrichtung VE zur Verfügung gestellt wird, wobei derjenige Teil des ersten charakteristischen Datensatzes EDS1, der die zu überwachenden Interaktionen beschreibt und weiterhin beschreibt, nach welchem Algorithmus der zweite charakteristische Datensatz gebildet werden soll, der zweiten Überwachungseinrichtung UEK zugeführt wird. Zur Laufzeit der Anwendung APP1 im produktiven Betrieb werden durch die Überwachungseinrichtung UEK die Interaktionen der Anwendung APP1 mit der "Umwelt", also allgemein Peripherie, Kommunikationsverbindungen, Speicher und dergleichen, insbesondere Interaktionen mit einer unterlagerten industriellen Steuerung und/oder einer Datensenke wie einem SCADA-System, überwacht. Dabei wird vorschriftsgemäß ein zweiter charakteristischer Datensatz erzeugt und in regelmäßigen Abständen der Vergleichseinrichtung VE übermittelt, wobei in der Vergleichseinrichtung VE überprüft wird, ob das tatsächliche Laufzeitverhalten signifikant oder nicht-signifikant vom zertifizierten Laufzeitverhalten beim Betrieb in der Testumgebung BOX1 abweicht, oder nicht.

In einer Ausführungsform können Informationen über das Laufzeitverhalten, also die registrierten Interaktionen der Anwendung APP1, zum Training eines neuronalen Netzes, also einer künstlichen Intelligenz, verwendet werden, wobei ein entweder automatisch erzeugtes Feedback und/oder ein Feedback von einem Überwachungsarbeitsplatz es ermöglicht, das neuronale Netz so zu trainieren, dass es zwischen erlaubten und nicht-erlaubten Interkationen und Verhaltensmustern unterscheiden kann.

Das trainierte neuronale Netz kann danach gegen weitere Veränderungen geschützt werden und mittels Zur-Verfügungstellung, insbesondere mittels des Anwendungsspeicher REP, schließlich der Überwachungseinrichtung UEK zur Verfügung gestellt werden, um Interaktionen, Laufzeitverhalten und Zugriffsverhalten der Anwendung APP1 im produktiven Betrieb zu überwachen. In dieser Variante ist die Vergleichseinrichtung VE dazu eingerichtet, Meldungen, insbesondere Alarme wegen nicht-erlaubten Interaktionsverhaltens, entgegenzunehmen, zu verarbeiten und entsprechende Reaktionen (Meldungen, Unterbrechungen etc.) in die Wege zu leiten.

## Patentansprüche

1. Verfahren zur Bereitstellung einer Anwendung (APP1, ..., APPn) für eine computergesteuerte Komponente (K),
insbesondere für ein industrielles Edge-Gerät,
wobei die Anwendung (APP1, ..., APPn) nach ihrer Erstellung mittels eines Anwendungsspeichers (REP),
insbesondere mittels eines APP-Stores, für die Komponente (K) bereitgestellt wird,
**dadurch gekennzeichnet,**
**dass** die Anwendung (APP1, ..., APPn) vor ihrer Bereitstellung in einer Testumgebung (BOX1, BOX2) ausgeführt wird, dass bei der Ausführung der Anwendung (APP1, ..., APPn) in der Testumgebung (BOX1, BOX2) ein erster charakteristischer Datensatz (EDS1), insbesondere ein Fingerprint, ein Hash-Wert, eine Profildatei oder eine Merkmalstabelle, über bei der Ausführung der Anwendung (APP1, ..., APPn) registrierte Interaktionen mit oder über die Testumgebung (BOX1, BOX2) gebildet wird,
wobei die Interaktionen jeweils Zugriffe auf Speicherzellen, Register oder Dienste
sind,
**dass** der erste Datensatz zu der Anwendung (APP1, ..., APPn) zugeordnet mittels des Anwendungsspeichers (REP) bereitgestellt wird,
**dass** zur Ausführung der Anwendung (APP1, ..., APPn) diese und der erste Datensatz (EDS1) zu der Komponente (K) übertragen werden,
**dass** während der Ausführung der Anwendung (APP1, ..., APPn) in einer Ausführungsumgebung (RT) der Komponente (K) zumindest zeitweise ein zweiter charakteristischer Datensatz über die dort registrierten Interaktionen der Anwendung (APP1, ..., APPn) mit oder über die Ausführungsumgebung (RT) gebildet wird,
**dass** der erste und der zweite charakteristische Datensatz miteinander verglichen werden, wobei bei einer Abweichung der Datensätze voneinander, die ein vorgegebenes Maß überschreitet, eine Fehlfunktion gemeldet wird und/oder die Ausführung der Anwendung (APP1, ..., APPn) gestoppt wird.

2. Verfahren nach Patentanspruch 1,
**dadurch gekennzeichnet,**
**dass** als die Testumgebung (BOX1, BOX2) eine gekapselte Ausführungsumgebung, insbesondere eine sogenannte Sandbox, verwendet wird.

3. Verfahren nach einem der vorhergehenden Patentansprüche, **dadurch gekennzeichnet,**
**dass** für die Testumgebung (BOX1, BOX2) eine auf einer Computer-Hardware ablaufende virtuelle Maschine (VM1, VM2) verwendet wird,
wobei durch die virtuelle Maschine (VM1, VM2) die Komponente (K) nachgebildet wird.

4. Verfahren nach einem der vorhergehenden Patentansprüche, **dadurch gekennzeichnet,**
**dass** anhand des ersten und des zweiten charakteristischen Datensatzes jeweils die Art und/oder die Häufigkeit von Zugriffen auf Daten einer mittelbar oder unmittelbar angebundenen industriellen Automatisierungskomponente, insbesondere einer industriellen Steuerung, durch die Anwendung (APP1, ..., APPn) dokumentiert wird.

5. Verfahren nach einem der vorhergehenden Patentansprüche, **dadurch gekennzeichnet,**
**dass** der erste charakteristische Datensatz zusammen mit der Anwendung (APP1, ..., APPn) in dem Anwendungsspeicher (REP) gespeichert wird, wobei der erste charakteristische Datensatz und die Anwendung (APP1, ..., APPn) durch einen gemeinsamen Übertragungsvorgang zu der Komponente (K) übermittelt werden.

6. Verfahren nach einem der vorhergehenden Patentansprüche, **dadurch gekennzeichnet,**
**dass** der erste charakteristische Datensatz (EDS1) mittels eines digitalen Zertifikats gegen Manipulationen geschützt wird.

7. Verfahren nach einem der vorhergehenden Patentansprüche, **dadurch gekennzeichnet,**
**dass** mit dem ersten charakteristischen Datensatz (EDS1) Informationen über Art und/oder Umfang der zu registrierenden Interaktionen und über deren Berücksichtigung für den ersten und den zweiten Datensatz verknüpft wird.

8. Verfahren nach einem der vorhergehenden Patentansprüche, **dadurch gekennzeichnet,**
**dass** der erste charakteristische Datensatz (EDS1) Informationen über nicht erlaubte Interaktionen, insbesondere über nichterlaubte Zugriffe auf Daten oder Funktionen der Komponente (K) und/oder der mit der Komponente (K) verknüpften Peripherie, umfasst,
wobei entsprechende Ports, Schnittstellen und dergleichen seitens der Komponente im Produktivbetrieb automatisch gesperrt werden.

9. Anordnung mit einer Testumgebung (BOX1, BOX2) zur Bereitstellung einer Anwendung (APP1, ..., APPn) für eine computergesteuerte Komponente (K),
insbesondere für ein industrielles Edge-Gerät,
und mit einer Komponente (K) mit einer in einer Ausführungsumgebung (RT) zur Ausführung der Anwendung (APP1, ..., APPn),
wobei die Testumgebung (BOX1, BOX2) eine gekapselte Ausführungsumgebung, insbesondere eine sogenannte Sandbox oder eine virtuelle Maschine (VM1, VM2), zur testweisen Ausführung der Anwendung (APP1, ..., APPn) umfasst, **dadurch gekennzeichnet,**
**dass** die Testumgebung (BOX1, BOX2) eine Überwachungseinrichtung (UE1, UE2) zur Registrierung von Interaktionen der Anwendung (APP1, ..., APPn) mit der oder über die Testumgebung (BOX1, BOX2) ausgestattet ist, wobei die Interaktionen jeweils Zugriffe auf Speicherzellen, Register oder Dienste sind,
wobei die Überwachungseinrichtung (UE1, UE2) dazu eingerichtet ist, aus den registrierten Interaktionen einen ersten charakteristischen Datensatz (EDS1), insbesondere einen Fingerprint, einen Hash-Wert, eine Profildatei oder eine Merkmalstabelle, zu bilden,
**dass** die Testumgebung (BOX1, BOX2) dazu eingerichtet ist, nach der testweisen Ausführung der Anwendung (APP1, ..., APPn) und nach der Erstellung des ersten charakteristischen Datensatzes (EDS1) die Anwendung (APP1, ..., APPn) und den ersten charakteristischen Datensatz (EDS1) zu einem Anwendungsspeicher (REP) zu übertragen,
**dass** die Komponente (K) zur Bildung eines zweiten charakteristischen Datensatzes über die dort registrierten Interaktionen der Anwendung (APP1, ..., APPn) mit oder über die Ausführungsumgebung (RT) eingerichtet ist, und dass vorgesehen ist, dass
der erste und der zweite charakteristische Datensatz miteinander verglichen werden, wobei bei einer Abweichung der Datensätze voneinander, die ein vorgegebenes Maß überschreitet, eine Fehlfunktion gemeldet wird und/oder die Ausführung der Anwendung (APP1, ..., APPn) gestoppt wird.

## Claims

1. Method for providing an application (APP1, ..., APPn) for a computer-controlled component (K), in particular for an industrial edge device,
wherein the application (APP1, ..., APPn) is provided for the component (K) according to its creation by means of an application store (REP), in particular by means of an APP store,
**characterised in that**
the application (APP1, ..., APPn) is executed in a test environment (BOX1, BOX2) before its provision,
with the execution of the application (APP1, ..., APPn) in the test environment (BOX1, BOX2), a first characteristic dataset (EDS1), in particular a fingerprint, a hash value, a profile file or a feature table, is formed with or via the test environment (BOX1, BOX2) by way of interactions registered with the execution of the application (APP1, ..., APPn),
wherein the interactions are in each case accesses to storage cells, registers or services,
the first data set is provided assigned to the application (APP1, ..., APPn) by means of the application store (REP),
in order to execute the application (APP1, ..., APPn), this and the first dataset (EDS1) are transmitted to the component (K),
during the execution of the application (APP1, ..., APPn) in an execution environment (RT) of the component (K), a second characteristic dataset relating to the interactions of the application (APP1, ..., APPn) registered there with or via the execution environment (RT) is formed at least temporarily,
the first and the second characteristic dataset are compared with one another, wherein with a deviation of the datasets from one another, which exceeds a predetermined degree, a malfunction is reported, and/or the execution of the application (APP1, ..., APPn) is stopped.

2. Method according to claim 1,
**characterised in that**
an encapsulated execution environment, in particular a so-called sandbox, is used as the test environment (BOX1, BOX2).

3. Method according to one of the preceding claims,
**characterised in that**
a virtual machine (VM1, VM2) running on a computer hardware is used for the test environment (BOX1, BOX2), wherein the component (K) is reproduced by the virtual machine (VM1, VM2).

4. Method according to one of the preceding claims,
**characterised in that**
using the first and the second characteristic dataset, in each case the type and/or the frequency of accesses to data of an industrial automation component tethered directly or indirectly, in particular an industrial controller, is documented by the application (APP1, ..., APPn).

5. Method according to one of the preceding claims,
**characterised in that**
the first characteristic dataset is stored together with the application (APP1, ..., APPn) in the application store (REP), wherein the first characteristic dataset and the application (APP1, ..., APPn) are transmitted by a shared transmission process to the component (K).

6. Method according to one of the preceding claims, **characterised in that**
the first characteristic dataset (EDS1) is protected against manipulations by means of a digital certificate.

7. Method according to one of the preceding claims, **characterised in that**
information relating to the type and scope of the interactions to be registered and relating to the consideration thereof for the first and the second dataset is linked to the first characteristic dataset (EDS1).

8. Method according to one of the preceding claims, **characterised in that**
the first characteristic dataset (EDS1) comprises information relating to non-permitted interactions, in particular relating to non-permitted accesses to data or functions of the component (K) and/or the periphery linked to the component (K),
wherein corresponding ports, interfaces and such like on the part of the component are automatically blocked during productive operation.

9. Arrangement with a test environment (BOX1, BOX2) for providing an application (APP1, ..., APPn) for a computer-controlled component (K),
in particular for an industrial edge device,
and with a component (K) with an in an execution environment (RT) for executing the application (APP1, ..., APPn),
wherein the test environment (BOX1, BOX2) comprises an encapsulated execution environment, in particular a so-called sandbox or a virtual machine (VM1, VM2), for executing the application (APP1, ..., APPn) for test purposes,
**characterised in that**
the test environment (BOX1, BOX2) is equipped a monitoring facility (UE1, UE2) for registering interactions of the application (APP1, ..., APPn) with the or relating to the text environment (BOX1, BOX2), wherein the interactions are accesses to storage cells, registers or services in each case,
wherein the monitoring facility (UE1, UE2) is designed to form a first characteristic dataset (EDS1), in particular a fingerprint, a hash value, a profile file or a feature table, from the registered interactions,
the test environment (BOX1, BOX2) is designed to transmit the application (APP1, ..., APPn) and the first characteristic dataset (EDS1) to an application store (REP) after the execution of the application (APP1, ..., APPn) for test purposes and after creating the first characteristic dataset (EDS1),
the component (K) is designed for forming a second characteristic dataset relating to the interactions of the application (APP1, ..., APPn) registered there with or relating to the execution environment (RT) and is provided so that
the first and the second characteristic dataset are compared with one another, wherein with a deviation in the datasets from one another, which exceeds a predetermined degree, a malfunction is reported, and/or the execution of the application (APP1, ..., APPn) is stopped.

## Revendications

1. Procédé de mise d'une application (APP1, ..., APPn) à disposition d'un composant (K) commandé par ordinateur, en particulier d'un appareil périphérique industriel, dans lequel on met l'application (APP1, ..., APPn), après son établissement, à disposition du composant (K), au moyen d'une mémoire (REP) d'application, en particulier au moyen d'un APP-store,
**caractérisé**
**en ce que** l'on exécute l'application (APP1,..., APPn), avant sa mise à disposition, dans un environnement (BOX1, BOX2) de test, en ce que, lors de l'exécution de l'application (APP1, ..., APPn) dans l'environnement (BOX1, BOX2) de test, on forme, par le biais d'interactions enregistrées lors de l'exécution de l'application (APP1, ..., APPn) avec ou par le biais de l'environnement (BOX1, BOX2) de test, un premier ensemble (EDS1) de données caractéristiques, en particulier l'empreinte digitale, une valeur de Hash, un fichier de profils ou une table de caractéristiques,
dans lequel les interactions sont des accès à des cellules de mémoire, des registres ou des services respectivement,
**en ce que** l'on met le premier ensemble de données, associé à l'application (APP1, ..., APPn), à disposition au moyen de la mémoire (REP) d'application,
**en ce que**, pour l'exécution de l'application (APP1, ..., APPn), on transmet celle-ci et le premier ensemble (EDS1) de données au composant (K),
**en ce que**, pendant l'exécution de l'application (APP1, ..., APPn) dans un environnement (RT) d'exécution du composant (K), on forme au moins, de temps à autre, un deuxième ensemble de données caractéristiques, par le biais des interactions, qui y sont enregistrées, de l'application (APP1, ..., APPn), avec ou par le biais de l'environnement (RT) d'exécution,
**en ce que** l'on compare le premier et le deuxième ensembles de données caractéristiques entre eux, dans lequel, si un écart entre les ensembles de données entre eux dépasse une mesure donnée à l'avance, on annonce une fonction d'erreur et/ou on arrête l'exécution de l'application (APP1, ..., APPn) .

2. Procédé suivant la revendication 1,
**caractérisé**
**en ce que** l'on utilise, comme environnement (BOX1, BOX2) de test, un environnement d'exécution enfermé, en particulier ce que l'on appelle une sand-box.

3. Procédé suivant l'une des revendications précédentes, **caractérisé**
**en ce que**, pour l'environnement (BOX1, BOX2) de test, on utilise une machine (VM1, VM2) se déroulant sur un matériel informatique,
dans lequel, par la machine (VM1, VM2) virtuelle, on simule le composant (K).

4. Procédé suivant l'une des revendications précédentes, **caractérisé**
**en ce que**, à l'aide du premier et du deuxième ensembles de données caractéristiques, on documente, par l'application (APP1, ..., APPn), respectivement le type et/ou la fréquence d'accès à des données d'un composant d'automatisation industrielle rattaché directement ou indirectement, en particulier d'une commande industrielle.

5. Procédé suivant l'une des revendications précédentes, **caractérisé**
**en ce que** l'on met le premier ensemble de données caractéristiques ensemble avec l'application (APP1, ..., APPn) dans la mémoire (REP) d'application, dans lequel on transmet au composant (K), par une opération de transmission commune, le premier ensemble de données caractéristiques et l'application (APP1, ..., APPn) .

6. Procédé suivant l'une des revendications précédentes, **caractérisé**
**en ce que** l'on protège, vis-à-vis de manipulations, le premier ensemble (EDS1) de données caractéristiques au moyen d'un certificat numérique.

7. Procédé suivant l'une des revendications précédentes, **caractérisé**
**en ce que** l'on combine, au premier ensemble (EDS1) de données caractéristiques, des informations sur le type et/ou l'étendue des interactions à enregistrer et sur leur prise en compte pour le premier et le deuxième ensembles de données.

8. Procédé suivant l'une des revendications précédentes, **caractérisé**
**en ce que** le premier ensemble (EDS1) de données caractéristiques comprend des informations sur des interactions, qui ne sont pas autorisées, en particulier sur des accès, qui ne sont pas autorisés, à des données ou à des fonctions du composant (K) et/ou de la périphérie combinée au composant (K),
dans lequel on barre automatiquement, dans le fonctionnement productif, des accès, des interfaces et analogues de la part du composant.

9. Agencement, comprenant un environnement (BOX1, BOX2) de test pour la mise d'une application (APP1, ..., APPn) à disposition d'un composant (K) commandé par ordinateur,
en particulier pour un appareil périphérique industriel,
et comprenant un composant (K) ayant un environnement (RT) d'exécution pour l'exécution de l'application (APP1, ..., APPn),
dans lequel l'environnement (BOX1, BOX2) de test comprend un environnement d'exécution enfermé, en particulier ce que l'on appelle une sandbox ou une machine (VM1, VM2) virtuelle pour l'exécution test par test de l'application (APP1, ..., APPn),
**caractérisé**
**en ce que** l'environnement (BOX1, BOX2) de test est équipé d'un dispositif (UE1, UE2) de contrôle pour l'enregistrement d'interactions de l'application (APP1, ..., APPn) avec ou en passant par l'environnement (BOX1, BOX2) de test, dans lequel les interactions sont respectivement des accès à des cellules de mémoire, des registres ou des services,
dans lequel le dispositif (UE1, UE2) de contrôle est agencé pour former, à partir des interactions enregistrées, un premier ensemble (EDS1) de données caractéristiques, en particulier une empreinte digitale, une valeur de Hash, un fichier de profils ou une table de caractéristiques,
**en ce que** l'environnement (BOX1, BOX2) de test est agencé pour transmettre à une mémoire (REP) d'application, après l'exécution test par test de l'application (APP1, ..., APPn) et après l'établissement du premier ensemble (EDS1) de données caractéristiques, l'application (APP1, ..., APPn) et le premier (EDS1) de données caractéristiques,
**en ce que** le composant (K) est agencé pour la formation d'un deuxième ensemble de données caractéristiques, par les interactions, qui y sont enregistrées, de l'application (APP1, ..., APPn), avec ou par le biais de l'environnement (RT) d'exécution, et en ce qu'il est prévu de comparer entre eux le premier ensemble et le deuxième ensemble de données caractéristiques, dans lequel, s'il y a un écart entre les ensembles de données entre eux, qui dépasse une mesure donnée à l'avance, on annonce une fonction d'erreur et/ou on arrête l'exécution de l'application (APP1, ..., APPn).
